(19) **Europäisches Patentamt**

**European Patent Office**

**Office européen des brevets**

(11) **EP 1 003 242 A1**

(12) # EUROPEAN PATENT APPLICATION

(43) Date of publication:
**24.05.2000 Bulletin 2000/21**

(51) Int Cl.$^7$: **H01R 3/08**, H02G 9/02

(21) Application number: **98850175.5**

(22) Date of filing: **17.11.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: **AKZO NOBEL N.V.**
**6800 SB Arnhem (NL)**

(72) Inventors:
• **Fontes, Eduardo**
**852 31 Sundsvall (SE)**
• **Ullman, Anders**
**840 10 Ljungaverk (SE)**
• **Dahlqvist, Karin**
**840 10 Ljungaverk (SE)**

(74) Representative: **Jönsson, Christer**
**Eka Chemicals AB,**
**Patent Department,**
**Box 11556**
**100 61 Stockholm (SE)**

(54) **Electrode for underwater current tranmission**

(57)     An electrode used for one pole for transmission of current, the electrode being electrically connected to a semi-infinite medium to serve as an anode or a cathode comprising at least one layer of electrically conductive material where said layer is essentially convex.

EP 1 003 242 A1

## Description

This invention relates to an electrode for transmission of preferably high voltage direct current and in particular to electrodes for use as one pole in underwater transmission of direct current. However, the invention can also be used for grounding, corrosion protection and other applications where controlled current distributions across electrodes are required.

Methods and systems for transmission of high voltage direct current are well known and increasingly used both for applications in transmission across ground and for applications involving transmission across sea water.

WO 8912334 describes electrodes for the use as one pole in a system for underwater transmission of direct current. In this system only one cable is used and return connection is obtained by using the saline sea water instead of a second cable. German laid-open document DE-A1-19600207 discloses an electrode for use in a high voltage direct current system where the electrode is restricted from direct contact with surrounding water.

By using substantially flat electrodes, disclosed in WO 8912334, having a large area of about 10-30 $m^2$, current densities are kept reasonably low. Though, at the borders there still exists sufficient high current densities which are responsible for a considerable formation of chlorine containing compounds. Hence, the disadvantage with the known systems is still that the electrochemical reactions occurring at the edges of the electrodes produce chlorine containing compounds such as hypochlorit and hypochlorous acid. A secondary effect is that chlorinated compounds such as dioxins may result from reactions between chlorine and various organic components in the vicinity of the electrodes. To suppress the formation of chlorine containing compounds at the electrodes is especially important at certain locations such as recreation areas with swimming beaches, but above all, in recipients with a very low circulation of the liquid in the recipient. For transmission of power in the order of 500 MW from coast to coast, it is customary to use high-voltage direct current for several reasons, such as lower installation costs, and because the use of direct current makes it possible to connect two non-synchronised A.C. mains with each other, independently of the frequency of the mains. In a feed station connected to a high-voltage A.C. mains, the A.C. voltage is rectified to about 400 kV D.C. Then the direct current which is about 1.2 kA, is conducted through an insulated cable on the bottom of the sea, while the return is effected through the sea-water between electrodes (anode and cathode) mounted on the bottom of the sea at each coast. The receiving station converts direct current to alternating current of any desired voltage. Since only one cable is used, the losses which are always caused by the line resistance, are reduced to a considerable extent.

It has surprisingly been found out that by using a convex shaped electrode the formation of chlorinated compounds and other by-products is significantly reduced as a result of a more uniform current density distribution across the electrode compared to an essentially flat electrode. The present invention overcomes the above mentioned disadvantages by providing an electrode for use as one pole for the transmission of current as claimed in claim 1. More specifically, the present invention is directed to an electrode used for one pole for transmission of current, the electrode being electrically connected to a semi-infinite medium to serve as an anode or a cathode comprising at least one layer of electrically conductive material whereby said layer is essentially convex.

The present invention is based on the principle that the current distribution is more uniform if an electrode is not essentially flat but the electrode geometry is curved (convex). The curvature decreases the exposure of the edges to edge currents while the current in the middle of the electrode increased. The word semi-infinite media relates preferably to sea water or dump conductive media such as clay, loam, sand or mud.

Further scope of the applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this description.

The present invention will become more fully understood from the detailed description given hereinbelow and the accompanying drawings are given by way of illustration only, and thus not limitative of the present invention.

Figure 1 shows schematically a rectangular electrode of the invention which is curved along the width (y-direction).

Figure 2 shows schematically a rectangular electrode of the invention which is curved both along the width and length (x and y-direction).

Figure 3 shows the curvature of the width (y-direction) of an electrode in a system of coordinates explaining the terms given in the equations.

Figure 4 shows a frame for electrode positioning.

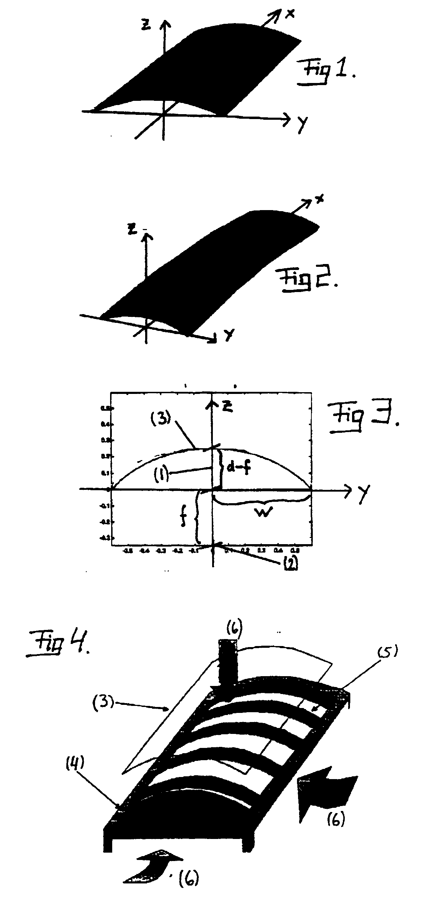

The electrode shown in the figures comprises at least one layer (3) of electrically conductive material said layer being essentially convex in respect to the sea bottom. Preferably, the shape of the layer in the direction along the length (x-direction) and along the width (y-direction) can be described by the following two equations where the z coordinate refers to the direction perpendicular to the bottom of the sea.

$$[1] \qquad z = a \sqrt{1 - \frac{x^2}{L^2}(1 - \frac{c^2}{a^2})} - c$$

which gives the curvature of the electrode layer along the length (x-direction),

$$[2] \qquad z = d \sqrt{1 - \frac{y^2}{W^2}(1 - \frac{f^2}{d^2})} - f$$

which gives the curvature of the electrode layer along the width (y-direction),

In equations [1] and [2] the constant $a$ and $d$ denote the principal semiaxles (1) of an ellipse in the z direction. The constants $c$ and $f$ denote the negative z positions of the middle (2) of an ellipse. The projected width and length of the electrode layer are given by 2x$W$ and 2x$L$, respectively. Thus, $a$-$c$ and $d$-$f$ denote the height of the electrode layer curvature. W, L and $d$, $a$ are positive values. $f$ and $c$ are values from the interval $0 \le f < d$ and $0 \le c < a$, respectively. According to one embodiment the electrode layer preferably has a circular projected area wherein f = 0, d/W = 1, c = 0 and a/L = 1. The electrode layer is preferably curved in one direction satisfying either equation [1] or [2]. The electrode layer may have a ratio of W to d - f from about 1 up to about 6. The electrode layer may have a ratio of L to a - c from about 1 up to about 6. According to another embodiment of the invention the electrode layer preferably is rectangular wherein f = 0 and d/W = 1 or c = 0 and a/L = 1, the curvature of the layer describing a half-circle. However, the projected area may also be quadratic. For practical reasons preferred projected area of a single electrode layer is suitably from about 5 m$^2$ up to about 50 m$^2$ preferably from about 10 m$^2$ - 40 m$^2$ most preferably from about 15 m$^2$ - 30 m$^2$. Basically, the size of the electrode layer is only set by topographic and economic considerations. Additionally, since the total projected electrode layer area can be extremely large, suitably up to several thousand m$^2$, single electrodes are preferably laid out as to form multiples. Rectangular electrodes with a curvature along the one direction, suitable the width, are preferably placed on the bottom of the sea side by side with their shorter edges in the vicinity to each other. Electrodes with curvatures both along their length and width are preferable used when they are positioned far away or when used as stand alone electrodes.

The electrode layer (3) may comprise a flexible electrically conductive material which is resistant to chlorine-alkali. The layer may have the shape of a thin, perforated metal sheet, an expanded metal sheet or metal mesh, a continuous surface of corrugated sheet metal, or a wire netting. Preferably, the layer has openings such that, in the installed state of the electrode, the surrounding sea-water may flow freely through the layer. If desired, e.g. for increased flexibility, two or more layers may be used instead of one layer. Suitable materials for the layer are titanium, titanium alloy, coated titanium or other corrosive resistant materials such as valve metals from Group IV of the periodic table, e.g. zirconium, niobium, nickel, ferrous metals, copper, noble metals, hastelloy, stainless steel and combination and alloys thereof. Other preferable materials for the layer may be conductive polymers, conductive ceramics and other electron conducting materials. Said layer preferably has an active coating comprising one or more precious metal oxides or some other suitable catalytic coating on the basis of both metal and oxides or mixtures thereof. Furthermore, said coating suitably comprises oxides and/ or mixtures thereof of elements from Group VIII of the periodic table which are mentioned in Swedish Patents 345,396, 345,970 and 349,952. The coating should preferably be such that the electrode may serve both as the anode and as the cathode, also at low temperatures and low salinity. Coated titanium netting which is available under the trademark ELGARD 150 Anode Mesh and ELGARD 210 Anode Mesh can be conveniently used. One advantage of using netting structures is that the (projected) surface is increased and thus the electrical field strength is reduced. This reduces the losses of contraction and the eventual impact of the electrode on living species of the sea.

Conductive bands or bars are preferably welded to the layer or the layers, said bands or bars being hermetically connected to the copper core of the power conductor.

The layer is preferably enclosed between protective structures of a flexible, mechanically resistant material which is resistant to chlorine-alkali. Examples of suitable materials are polyolefins and fluorine-substituting materials. Each of the structures, has a projected surface which is substantially the same size as that of the layer, and said structures are adapted to protect the conductive layer against mechanical damage, both when the electrode is being transported and secured and when in use. Thus, the structure is adapted to protect the layer against damage that could be caused by the bottom of the sea, and further to protect against any objects and tools dropped into the sea as well as against securing means.

In order to mount the electrode at the bottom of the sea and retain its shape during operation the electrode layer (3) is suitably mounted in a frame (4). This frame is preferably made of glass fibre armed concrete equipped with ribs (5) of equal curvature as that of the electrode. However, other suitable materials may be chosen. The frame should preferably allow a free flow of sea water (6) through the electrode. Furthermore, the electrode may preferably be embedded in dump conductive media such as clay, loam, sand or mud.

The invention being thus described, it will be obvious that the same may be varied in many ways. Such variations are not to be regarded as a departure from the gist and scope of the present invention, and all such modifications as would be obvious to one skilled in the art are intended to be included within the scope of the following claims.

## Claims

1. An electrode used for one pole for transmission of current, the electrode being electrically connected to a semi-infinite medium to serve as an anode or a cathode comprising at least one layer of electrically conductive material **characterised** in that said layer is essentially convex.

2. An electrode according to claim 1 used for one pole in underwater transmission of high-voltage direct current adapted to be stationary on the bottom of the sea to serve as an anode or a cathode comprising at least one layer of electrically conductive material **characterised** in that said layer (3) is essentially convex with respect to the bottom of the sea.

3. An electrode according to claim 1 **characterised** in that said layer satisfies at least one of the equations:

$$[1] \qquad z = a\sqrt{1 - \frac{x^2}{L^2}(1 - \frac{c^2}{a^2})} - c$$

which gives the curvature of the electrode layer along the length (x-direction),

$$[2] \qquad z = d\sqrt{1 - \frac{y^2}{W^2}(1 - \frac{f^2}{d^2})} - f$$

which gives the curvature of the electrode layer along the width (y-direction), wherein

   $a$ and $d$ are constants for the principal semiaxles (1) of an ellipse in the z-direction;
   $c$ and $f$ are the negative z-positions of the middle (2) of the ellipse;
   2xW is the electrode width;
   2xL is the electrode length;
   W, L and $d$, $a$ are positive values;
   $f$ is a value from the intervall $0 \leq f < d$; and
   $c$ is a value from the intervall $0 \leq c < a$.

4. An electrode according to claim 3 **characterised** in that said layer satisfies either equation [1] or equation [2].

5. An electrode according to claim 3 **characterised** in that said layer has a ratio of W to $d - f$ from about 1 up to about 6.

6. An electrode according to claim 3 **characterised** in that said layer has a ratio of L to $a - c$ from about 1 up to about 6.

7. An electrode according to claims 3-6 **characterised** in that said layer is rectangular wherein f = 0 and d/W = 1 or c = 0 and a/L = 1.

8. An electrode according to claim 3 **characterised** in that said layer has a circular projected area wherein f = 0, d/W = 1, c = 0 and a/L = 1.

9. An electrode according to any of the preceding claims **characterised** in that said layer comprises a perforated metal sheet.

10. An electrode according to any of the preceding claims **characterised** in that said layer comprises an expanded metal sheet and or a wire netting.

11. An electrode according to any of the preceding claims **characterised** in that said layer is made of titanuim, a titanium alloy or coated titanium.

12. An electrode according to claim 8 **characterised** in that the layer is made of titanium which is coated with one or more precious metal oxides or some other suitable catalytic coating on the basis of both metal and oxides or mixtures thereof.

13. Use of an electrode according to any of the preceding claims for the transmission of high-voltage direct current conducted through an insulated cable on the bottom om the sea while the return is effected through the sea water between two electrodes one of them being said electrode.

14. Device for underwater transmission of high voltage direct current including at least one electrode according to any of the claims 1-9 **characterised** in that said device comprises an insulated cable, two electrodes on the bottom of the sea, a feed station connected to a high voltage alternating current and a receiving station converting the direct current to alternating current.

Fig 1.

Fig 2.

Fig 3.

Fig 4.

European Patent Office

**EUROPEAN SEARCH REPORT**

Application Number

EP 98 85 0175

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 98 19362 A (ABB) 7 May 1998<br><br>* page 12, line 23 - page 13, line 12; figures 2C,3A,8A *<br>--- | 1,2,13, 14 | H01R3/08<br>H02G9/02 |
| D,A | WO 89 12334 A (PERMASCAND) 14 December 1989<br>* page 3, line 3 - line 20; figures 1,2 *<br>----- | 1,2,9-13 | |

TECHNICAL FIELDS SEARCHED (Int.Cl.6)

H01R
H02G

The present search report has been drawn up for all claims

| Place of search | Date of completion of the search | Examiner |
|---|---|---|
| BERLIN | 6 April 1999 | Alexatos, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 98 85 0175

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-1999

| Patent document cited in search report | | Publication date | Patent family member(s) | | Publication date |
|---|---|---|---|---|---|
| WO 9819362 | A | 07-05-1998 | EP | 0882314 A | 09-12-1998 |
| | | | WO | 9819363 A | 07-05-1998 |
| | | | WO | 9819364 A | 07-05-1998 |
| WO 8912334 | A | 14-12-1989 | SE | 460938 B | 04-12-1989 |
| | | | AU | 620882 B | 27-02-1992 |
| | | | AU | 3689689 A | 05-01-1990 |
| | | | CA | 1330575 A | 05-07-1994 |
| | | | DE | 68915166 D | 09-06-1994 |
| | | | DE | 68915166 T | 18-08-1994 |
| | | | DK | 268390 A | 08-11-1990 |
| | | | EP | 0417155 A | 20-03-1991 |
| | | | FI | 94192 B | 13-04-1995 |
| | | | GR | 89100357 A,B | 12-03-1990 |
| | | | NO | 176899 B | 06-03-1995 |
| | | | US | 5120904 A | 09-06-1992 |

EPO FORM P0459

For more details about this annex : see Official Journal of the European Patent Office, No. 12/82